# EUROPEAN PATENT APPLICATION

(11) **EP 2 009 845 A1**
(43) Date of publication of application: **31.12.2008**
(21) Application number: 07301091.0
(22) Date of filing: 07.06.2007
(51) Int. Cl.: H04L 12/28

(54) **Method and apparatus for error messaging in a multimedia network**

(71) Applicant: Thomson Licensing, 92100 Boulogne-Billancourt (FR)
(72) Inventor: Henry, Jean-Baptiste, 35520, Melesse (FR); Seingier, François-Xavier, 35700, RENNES (FR)
(74) Representative: Ruellan-Lemonnier, Brigitte

(57) **Abstract**

In certain home multimedia networks having a plurality of terminals, there are no provisions for sending error messages when a service cannot be delivered owing to conflicts with another service. The present invention proposes to let the media server of the tuner (230) in such a network (120) provide an image bearing the message and deliver this image to the terminal (150, 155) that otherwise would be left in the dark.

## Description

### FIELD OF THE INVENTION

The present invention is generally directed to digital content distribution, and in particular to error reporting in digital content distribution networks.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

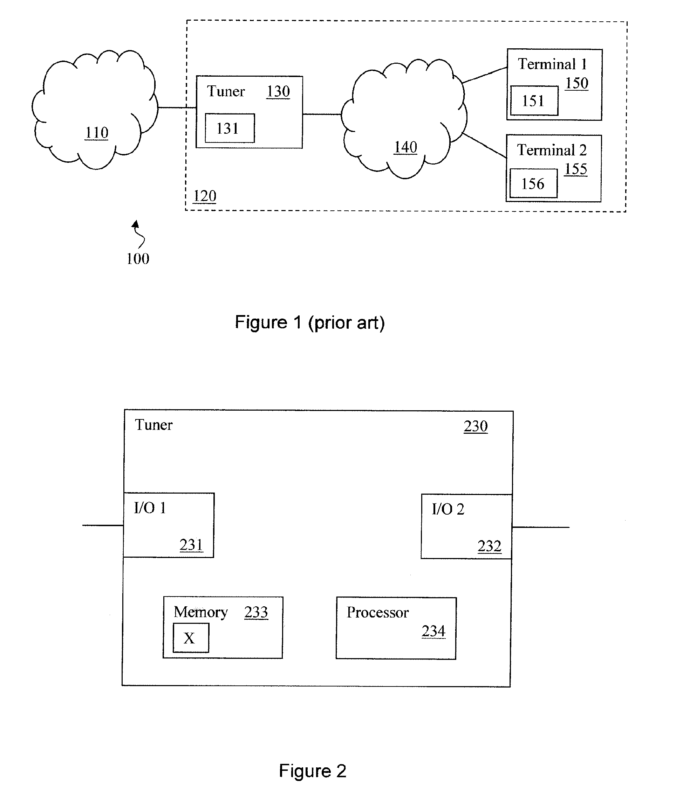

Figure 1 illustrates an exemplary prior art network that will help present a problem solved by the present invention. The network 100 comprises an access network 110 and a home network 120. The access network 110, which may be based on any suitable technology such as for example broadcast satellite or broadband ADSL, is adapted to deliver content, such as broadcast television, to a plurality of home networks 120 (only one home network is shown in the Figure for reasons of clarity.)

The content delivered over the access network 110 to the home network 120 is received by a gateway device 130, hereinafter called "tuner". The tuner 130 is adapted to select at least one item of content and to deliver it over an internal network 140, that for example is Ethernet based, to at least one of a plurality of terminals 150, 155.

The tuner 130 works as a media server towards the terminals 150, 155 and is preferably adapted to provide a content service list to them, this service list providing a view on all the content accessible by the tuner 130. The terminals 150, 155 are able to retrieve or receive this list from a media server in the tuner.

Assume, for example, the first terminal 150 uses a SD&S (Service Description and Selection) protocol to select a service, such as a particular program, from the service list and to request the tuner 130 to deliver the service on the internal network 140. According to the protocol, the first terminal 150 comprises a RTP (Real Time Protocol) client 151, the tuner 130 comprises a RTP server 131, and the terminal 150 sends a IGMP (Internet Group Multicast Protocol) join request on the network, which multicast group address is corresponding to the service; the Multicast group address being indicated in the list. The tuner 130 then accesses the service via the access network 110. Depending on the technology used in the access network 110, the access may for example be established by locking to the right frequency or by joining the right multicast group. Once the service has been accessed, the tuner 130 sends the service over the internal network 140.

Assume then that the second terminal 155 requests another service, using its RTP client 156 in a similar manner. If this second service is compatible with the first service - i.e. it may be accessed from the access network 110 in parallel with the first service, which may be the case if the services for example share a frequency, or there is enough bandwidth left to retrieve the service and send it over the internal network 140 - then the second service will be delivered to the second terminal 155.

However, the second service may also be incompatible with the first service, e.g. if they do not share a frequency or if sufficient bandwidth is lacking. In this case it is not possible to deliver both services and the tuner 130 is left with a choice: either it refuses the request or it accepts the request at the cost of stopping the delivery of the first service to the first terminal 150. In both cases, a terminal will be left in the dark as to what happened, since the protocol does not provide any error messages.

It will be appreciated that users would benefit from a solution to this problem. At present, though, no such solutions exist and it is an object of the present invention to provide a solution that enables users be alerted for example when service delivery is impossible for any of the reasons detailed hereinbefore.

### SUMMARY OF THE INVENTION

In a first aspect, the invention is directed to a method for delivering error information in a network that comprises an apparatus and a first device. The apparatus receives from the first device a request for a first service. In case the first service may not be delivered, the apparatus delivers a media content item to the first device, the media content item being such that it, when rendered to a user, provides to the user error information about the non-delivery of the first service.

In an advantageous embodiment, the network further comprises at least one second device to which the apparatus delivers a second service. If the second service is to be refused in order to deliver the first service, the apparatus refuses delivery of the second service; and delivers a media content item to the at least one second device, the media content item being such that it, when rendered to a user, provides to the user error information about the non-delivery of the second service.

In a further advantageous embodiment, the media content item is an image.

In a further advantageous embodiment, the network uses a protocol that lacks error messages to inform a user when a service is refused.

In a further advantageous embodiment, the first service is accessed by the apparatus over a second network. It is advantageous that also the second service is accessed by the apparatus over the second network.

In a second aspect, the invention is directed to an apparatus adapted to be connected to a network further comprising a first device. The apparatus comprises an interface adapted to receive from the first device a request for a first service; and a processor adapted to, in case the first service may not be delivered, deliver a media content item to the first device, the media content item being such that it, when rendered to a user, provides to the user error information about the non-delivery of the service.

In an advantageous embodiment, the apparatus is further adapted to be connected to at least one second device to which a second service is delivered. The processor is further adapted to, if the second service is to be refused in order to deliver the first service, refuse delivery of the second service; and deliver a media content item to the at least one second device, the media content item being such that it, when rendered to a user, provides to the user error information about the non-delivery of the second service.

In a further advantageous embodiment, the media content item is an image.

In a further advantageous embodiment, the processor is further adapted to communicate with the first and second device using a protocol that lacks error messages to inform a user when a service is refused.

In a further advantageous embodiment, the apparatus further comprises a second interface adapted to be connected to a second network and the processor is further adapted to access the first service over the second network. It is further advantageous that the apparatus is adapted to access also the second service over the second network.

### BRIEF DESCRIPTION OF THE DRAWINGS

Preferred features of the present invention will now be described, by way of example, with reference to the accompanying drawings, in which: Figure 1, already described hereinbefore, illustrates a prior art network; and Figure 2 illustrates an apparatus according to a preferred embodiment of the present invention.

### DETAILED DESCRIPTION OF PREFERRED EMBODIMENTS

Figure 2 illustrates an apparatus according to a preferred embodiment of the present invention. Figure 2 only illustrates the apparatus itself, while the objects of Figure 1 that are outside the apparatus are not shown, but the same reference numbers will be used for convenience. Furthermore, internal connections are left out of the Figure for the sake of clarity.

The apparatus, in the present example a tuner 230, comprises at least a first interface (I/O 1) 231 for communication with an access network 110 and a second interface (I/O 2) 232 for communication with terminals 150, 155 over an internal network 140. The tuner 230 further comprises at least one memory (hereinafter "memory") 233 and at least one processor (hereinafter "processor") 234 adapted to respond to requests from the terminals 150, 155.

Assume now that the terminals 150, 155 request services from the tuner 230 in the same order as that described hereinbefore, i.e. the first terminal 150 requests a first service after which the second terminal 155 requests a second service. The processor 234 preferably performs the functions of the media server 131 depicted in Figure 1, and the latter is for that reason not shown.

As already mentioned, if the two services are compatible, then the processor 234 will provide each terminal 150, 155 with the requested service. The present invention is used if the two services are incompatible. As previously remarked, the prior art tuner 130 has the choice between either stopping the first service to deliver the second service (without notifying the first terminal 150) or continuing the first service without delivering the second service (without notifying the second terminal 155). The inventive tuner 230, however, overcomes this problem of the prior art in that the processor 234 either retrieves an image X from the memory 233 or creates an image Y (not shown), for example by superposition or insertion of relevant words on a white background, in order to send it to the relevant terminal.

If, for example, the processor 234 is programmed to interrupt the first service to deliver the second service, then it sends the retrieved or created image to the first terminal 150 that then, in a sense believing it is part of the service, displays the image to the user. It is advantageous that the image in this case states something along the lines of: "The service has been interrupted to deliver a service to another terminal." In case the network 100 comprises a plurality of terminals to which the delivered service is interrupted, it is advantageous to send the image to all these terminals.

On the other hand, if the processor 234 is programmed to continue the first service and refuse the request for the second service, then it sends the retrieved or created image to the second terminal 155 that then, also in a sense believing that the service is delivered, displays the image to the user. In this case it is advantageous that the image in this case states words to the effect of: "The service cannot be delivered as a service is being delivered to another terminal."

As there is no need to access the access network 110 in order to retrieve an image and that the images may be made to consume very little bandwidth, the processor 234 is practically always able to send an image to a terminal.

The skilled person will appreciate that the invention for example allows error messaging in a network without dedicated messages in the protocol used for communication. This is due to the fact that the message masquerades as content that is delivered to a terminal.

The skilled person will also appreciate that the invention is not limited to images, but that other means of communication, such as sound, may also be employed, possibly in conjunction with images.

It will be understood that the present invention has been described purely by way of example. Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference numerals appearing in the claims are by way of illustration only and shall have no limiting effect on the scope of the claims.

## Claims

1. A method for delivering error information in a network (120) comprising an apparatus (230) and a first device (155), the method comprising, at the apparatus (230), the steps of:
- receiving from the first device (155) a request for a first service; and
- in case the first service may not be delivered, delivering a media content item to the first device (155), the media content item being such that it, when rendered to a user, provides to the user error information about the non-delivery of the first service.

2. The method of claim 1, wherein the network further comprises at least one second device (150) and the method further comprises a previous step of delivering a second service to the at least one second device (150); and the method further comprises, if the second service is to be refused in order to deliver the first service, the steps of:
- refusing delivery of the second service; and
- delivering a media content item to the at least one second device (150), the media content item being such that it, when rendered to a user, provides to the user error information about the non-delivery of the second service.

3. The method of claim 1 or 2, wherein the media content item is an image.

4. The method of claim 1 or 2, wherein the network (120) uses a protocol that lacks error messages to inform a user when a service is refused.

5. The method of claim 1, wherein the first service is accessed by the apparatus (230) over a second network (110).

6. The method of claim 2, wherein the first service and the second service is accessed by the apparatus (230) over a second network (110).

7. An apparatus (230) adapted to be connected to a network (120) further comprising a first device (155), the apparatus (230) comprising:
- an interface (232) adapted to receive from the first device (155) a request for a first service; and
- a processor (234) adapted to, in case the first service may not be delivered, deliver a media content item to the first device (155), the media content item being such that it, when rendered to a user, provides to the user error information about the non-delivery of the service.

8. The apparatus of claim 7, wherein the apparatus (230) is further adapted to be connected to at least one second device (150) and the processor (234) is adapted to:
- deliver a second service to the at least one second device (150); and
- if the second service is to be refused in order to deliver the first service:
- refuse delivery of the second service; and
- deliver a media content item to the at least one second device (150), the media content item being such that it, when rendered to a user, provides to the user error information about the non-delivery of the second service.

9. The apparatus of claim 7 or 8, wherein the media content item is an image.

10. The apparatus of claim 7 or 8, wherein the processor (234) is further adapted to communicate with the first and second device (155; 150) using a protocol that lacks error messages to inform a user when a service is refused.

11. The apparatus of claim 7, wherein the apparatus (230) further comprises a second interface (231) adapted to be connected to a second network (110) and the processor (234) is further adapted to access the first service over the second network (110).

12. The apparatus of claim 8, wherein the apparatus (230) further comprises a second interface (231) adapted to be connected to a second network (110) and the processor (234) is further adapted to access the first service and the second service over the second network (110).
